# EUROPÄISCHE PATENTSCHRIFT

(11) **EP 3 177 547 B1**
(45) Veröffentlichungstag und Bekanntmachung des Hinweises auf die Patenterteilung: **12.09.2018**
(21) Anmeldenummer: 15738590.7
(22) Anmeldetag: 13.07.2015
(51) Int. Cl.: B65D 77/02, B65D 85/10

(54) **ZIGARETTENPACKUNG**
CIGARETTE PACKAGE
PAQUET DE CIGARETTES

(30) Priorität: 06.08.2014 DE 102014011396
(43) Veröffentlichungstag der Anmeldung: 14.06.2017
(60) Teilanmeldung: 17001656.2
(73) Patentinhaber: Focke & Co. (GmbH & Co. KG), 27283 Verden (DE)
(72) Erfinder: BUSE, Henry, 27374 Visselhövede (DE); SCHÖNBERGER, Hans, 27283 Verden (DE); SCHLENKER, Michael, 27283 Verden (DE)
(74) Vertreter: Bolte, Erich
(86) Internationale Anmeldenummer: PCT/EP2015/001429
(87) Internationale Veröffentlichungsnummer: WO 2016/020032

(56) Entgegenhaltungen:
- EP-B1- 2 155 568
- WO-A1-2010/066543
- WO-A1-2012/095135
- WO-A1-2012/147073
- WO-A1-2013/120916
- WO-A1-2014/013478
- DE-A1- 2 710 163
- DE-B- 1 142 545

## Beschreibung

Die Erfindung betrifft Packungen, insbesondere für Zigarettengruppen, mit den Merkmalen des Oberbegriffs des Anspruchs 1 und/oder des Anspruchs 6.

Zigarettenpackungen mit einer Innenumhüllung aus insbesondere feuchtigkeits- und aromadichter Folie sind in unterschiedlicher Ausführung bekannt, wobei Zigarettengruppe und Innenumhüllung einen (Dicht-)Block bilden.

Der Zigarettenblock bzw. Dichtblock kann mit einer besonderen mehrfach benutzbaren Öffnungshilfe versehen sein, insbesondere in der Ausführung mit einem klebenden Verschlussetikett für eine Öffnung, die nach Entnahme von Packungsinhalt durch den Verbraucher wieder in die Schließstellung gebracht werden kann.

Das Verschlussetikett kann von Hand betätigt werden, insbesondere mittels Grifflasche. Bekannt sind Zigarettenpackungen, bei denen das Verschlussetikett der Innenpackung mit einem Endstück dauerhaft an der Innenseite des Deckels einer Klappdeckelpackung als Außenpackung befestigt ist, sodass beim Betätigen des Deckels das Verschlussetikett in Öffnungs- oder Schließstellung bewegt wird (EP 2 155 568 B1). Eine weitere Packung ist aus WO2012147073 bekannt. Die Erfindung befasst sich mit Verbesserungen an Packungen der vorstehenden oder ähnlicher Ausführung. Einerseits geht es um Maßnahmen für die zuverlässige Herstellung einer (klebenden) Verbindung des Verschlussetiketts mit dem Deckel der (Außen-)Packung. Andererseits geht es um die Gestaltung der Packung zur Erleichterung einer präzisen, zuverlässigen Anbringung des 2016142413.DOC

Verschlussmittels bzw. Verschlussetiketts an der blockförmigen Innenpackung, sowie um ein optimales Erscheinungsbild der Packung.

Zur Lösung der vorstehenden Aufgabe ist die Packung mit den Merkmalen des Anspruchs 1 und/oder mit den Merkmalen des Anspruchs 6.

Bei der Packung sind zum selbsttätigen Herstellen der Verbindung zwischen Verschlussetikett und Außenpackung bzw. Deckel sind gezielt Vorsprünge bzw. Druckstücke an der Packung angebracht, die bei der Fertigung der Packung und/oder bei der Benutzung derselben die (klebende) Verbindung aufgrund der Erzeugung von örtlichem Anpressdruck im Bereich einer Betätigungslasche des Verschlussetiketts einerseits und der Verbindungsstelle an der Innenseite der Deckel-Vorderwand andererseits zuverlässig herstellen.

Bei einer (Zigaretten-)Packung mit Stützorgan - Innenkragen bzw. Innen-Tray - innerhalb der Innenpackung ist das Stützorgan bzw. der Innenkragen mit mindestens einer nach außen gerichteten Erhöhung oder Verdickung versehen im Bereich der Herstellung der Verbindung des Verschlussetiketts mit der Außenpackung. Die Erhöhung ist vorzugsweise als durch Prägen des Materials entstehender Vorsprung ausgebildet. Vorzugsweise ist die Außenpackung zusätzlich oder alternativ im Bereich der Deckel-Vorderwand, insbesondere an der Innenseite eines Deckel-Innenlappens, mit einer Verdickung bzw. mit einem ebenfalls durch Prägen hergestellten (wulstartigen) Vorsprung versehen. Die inneren und äußeren Vorsprünge sind vorzugsweise so angeordnet, dass sie bei der Herstellung der Verbindung zwischen Verschlussetikett und Deckel zusammenwirken. Die Erhöhungen oder Vorsprünge können alternativ oder zusätzlich auch an einer Kragen-Vorderwand eines entsprechend ausgebildeten Kragens einer Klappschachtel als Außenpackung angebracht sein.

Bei einer anderen Ausführung der Erfindung wird ein (örtlich erhöhter) Druck zwischen Deckelwandung (Deckel-Vorderwand) und Verschlussetikett durch ein Materialstück bzw. Ausgleichsstück geschaffen, welches leicht lösbar an der Innenpackung oder - vorzugsweise - im Bereich eines Kragens einer im Wesentlichen standardmäßig ausgebildeten Klappschachtel (Hinge Lid Packung) angeordnet ist. Vorzugsweise ist das Ausgleichsstück (ursprünglich) Teil des Kragens und lösbar mit diesem verbunden, insbesondere mittels Stanzungen bzw. Restverbindungen. Beim Herstellen der (Außen-)Packung, nämlich beim Falten oder Schließen des Deckels, entsteht im Bereich der Verbindung zwischen Verschlussetikett und Deckel der erforderliche Anlagedruck. Beim (erstmaligen) Öffnen des Deckels wird das Ausgleichsstück vom Kragen abgetrennt und mit dem Verschlussetikett in die Öffnungsstellung bewegt. Das Ausgleichsstück bleibt mit dem Randbereich des Verschlussetiketts in dauerhafter Verbindung.

Bei einer besonderen Ausführung einer (Außen-)Packung des Typs Klappschachtel ist ein Zigarettenblock, insbesondere Dichtblock, in der Außenpackung vorzugsweise ohne Kragen angeordnet. Der Dichtblock weist eine Öffnungslasche auf, die mittels Schwächungslinien (Perforation) aus dem Material bzw. der Wandung des Dichtblocks gebildet ist und die beim erstmaligen Öffnen des Deckels aus dem Verbund mit der Innenumhüllung herausgetrennt wird, vorzugsweise aufgrund der Verbindung eines Endstücks bzw. einer Zunge der Öffnungslasche mit der Innenseite der Deckel-Vorderwand.

Um eine präzise Anbringung bzw. Positionierung von Öffnungs- bzw. Verschlussetiketten auch bei großflächiger Ausführung an der Innenpackung zu gewährleisten, ist bei einer Klappschachtel mit üblichem Kragen als Außenpackung der Kragen in besonderer Weise gestaltet. Eine im Bereich einer Kragen-Vorderwand übliche Ausnehmung ist so ausgebildet, dass sie sich (annähernd) über die volle Breite der Kragen-Vorderwand erstreckt und vorzugsweise - der Höhe nach - bis zu einer frontseitigen, oberen Kante einer Schachtel-Vorderwand (Schließkante für den Deckel) erstreckt. Die Ausnehmung ist seitlich durch Kragen-Seitenlappen begrenzt. Die Vorderseite der Innenpackung, nämlich die Innen-Vorderwand, liegt dadurch über die volle Breite frei, so dass die Anbringung und auch die Handhabung des Verschlussetiketts erleichtert sind.

Eine andere Besonderheit für (Zigaretten-)Packungen des Typs Klappschachtel im allgemeinen und insbesondere mit einem mehrfach verschließbaren Dichtblock als Innenpackung besteht darin, einen bei diesem Packungstyp üblichen Deckel-Innenlappen hinsichtlich der Position, der Form und der Größe so auf einen vorzugsweise aus einem gesonderten Zuschnitt bestehenden Kragen der Klappschachtel auszurichten, dass bei geschlossenem Deckel der Deckel-Innenlappen überwiegend oder vorzugsweise vollständig innerhalb der im Bereich der Kragen-Vorderwand gebildeten Ausnehmung angeordnet ist. Bei geschlossenem Deckel liegen die Kragen-Vorderwand und der vorzugsweise besonders ausgebildete Deckel-Innenlappen (etwa) in einer gemeinsamen Ebene. Die Ausnehmung der Kragen-Vorderwand ist vorzugsweise so ausgebildet, dass bei geschlossenem Deckel im Bereich einer Schachtel-Vorderwand des Schachtelteils - unterhalb einer von der Deckel-Vorderwand gebildeten Schließkante - eine Öffnung bzw. ein Fenster gebildet ist, vorzugsweise etwa in der Breite bzw. Länge der Abmessung des Deckel-Innenlappens.

Weitere Einzelheiten und Merkmale der Innovation ergeben sich aus der Beschreibung der in den Patentzeichnungen dargestellten Ausführungsbeispiele. Die Ausführungsbeispiele der Figuren 8-20 sind nicht Teil der Erfindung. Es zeigt:
- Fig. 1: eine Innenpackung bzw. einen Dichtblock mit Verschlussetikett in perspektivischer Darstellung,
- Fig. 2: eine komplette (Zigaretten-)Packung in der Ausführung als Klappschachtel mit geöffnetem Deckel, ebenfalls in perspektivischer Darstellung,
- Fig. 3: einen Vertikalschnitt eines oberen Bereichs der Packung gemäß Fig. 2, bei vergrößertem Maßstab,
- Fig. 4: eine Darstellung analog Fig. 3 bei geschlossenem Deckel der Außenpackung,
- Fig. 5: eine andere Ausführung einer Innen- bzw. Dichtpackung in perspektivischer Darstellung,
- Fig. 6: eine (Zigaretten-)Packung analog zu Fig. 2 mit einem Dichtblock der Fig. 5,
- Fig. 7: einen vertikalen Teilschnitt VII-VII der Fig. 6 in vergrößertem Maßstab,
- Fig. 8: eine dritte Ausführung einer Innen- bzw. Dichtpackung in perspektivischer Darstellung,
- Fig. 9: eine Zigarettenpackung in einer Darstellung analog Fig. 2, Fig. 6 mit einer Innenpackung gemäß Fig. 8,
- Fig. 10: einen vertikalen Teilschnitt X-X der Fig. 9 in vergrößertem Maßstab,
- Fig. 11: eine weitere Ausführung einer Packung mit offenem Deckel in perspektivischer Darstellung,
- Fig. 12: eine Darstellung einer Packung analog Fig. 11 für eine Ausführung mit Schrägkanten (Oktagonal-Packung),
- Fig. 13: eine Darstellung entsprechend Fig. 12 für eine Außenpackung mit Rundkanten,
- Fig. 14: einen ausgebreiteten Zuschnitt für einen Kragen der Außenpackung,
- Fig. 15: eine Innenpackung, insbesondere ein Dichtblock in Vorderansicht,
- Fig. 16: eine (Zigaretten-)Packung in der Ausführung mit Klappschachtel und Teilansicht auf Innenpackung mit Kragen,
- Fig. 17: einen Vertikalschnitt durch einen oberen Teilbereich der Packung gemäß Fig. 16, Schnittebene XVII-XVII, in vergrößertem Maßstab,
- Fig. 18: die Packung gemäß Fig. 17 in frontseitiger Ansicht mit Vertikalschnitt im Deckelbereich entsprechend Sicht- und Schnittebene XVIII-XVIII,
- Fig. 19: einen Teilbereich eines ausgebreiteten Zuschnitts für eine (Außen-)Packung gemäß Fig. 16 bis Fig. 18,
- Fig. 20: einen Ausschnitt XX in Fig. 18 bei vergrößertem Maßstab.

Die dargestellten Zigarettenpackungen betreffen ein besonderes Zusammenspiel zwischen einer Außenpackung 10, insbesondere in der Ausführung einer Klappschachtel bzw. Hinge Lid Packung und einer Innenpackung 11. Diese besteht aus einem Folienzuschnitt, insbesondere in der Ausführung als (thermisch siegelbarer) mehrlagigen Dichtfolie. Die Innenpackung 11 bzw. der Folienzuschnitt umgibt eine Zigarettengruppe 12 unter Bildung von Innen-Vorderwand 13, Innen-Rückwand 14, Innen-Seitenwänden 15 und Innen-Stirnwand 16. Eine ebenfalls vorhandene Innen-Bodenwand ist nicht gezeigt.

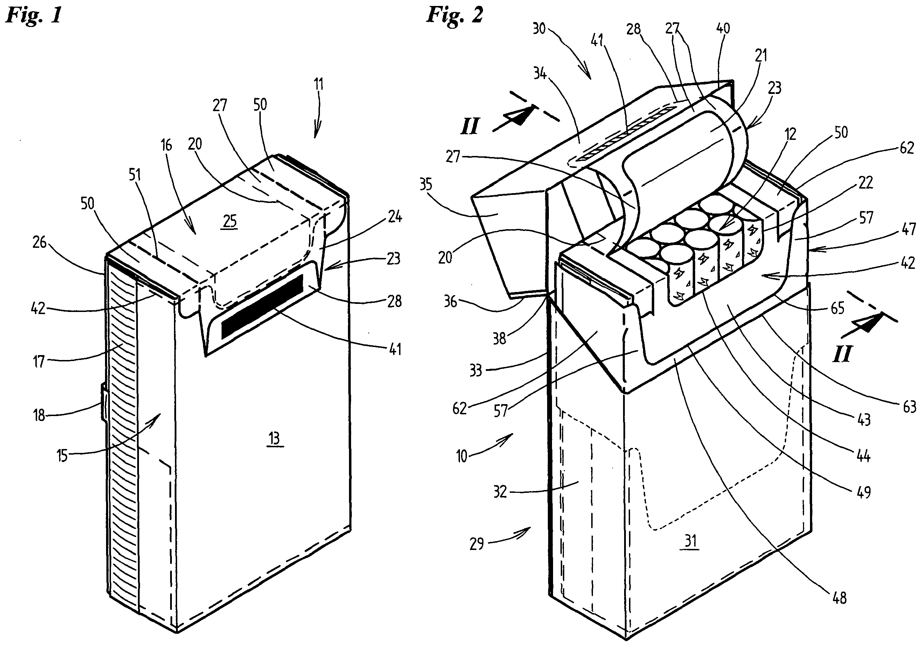

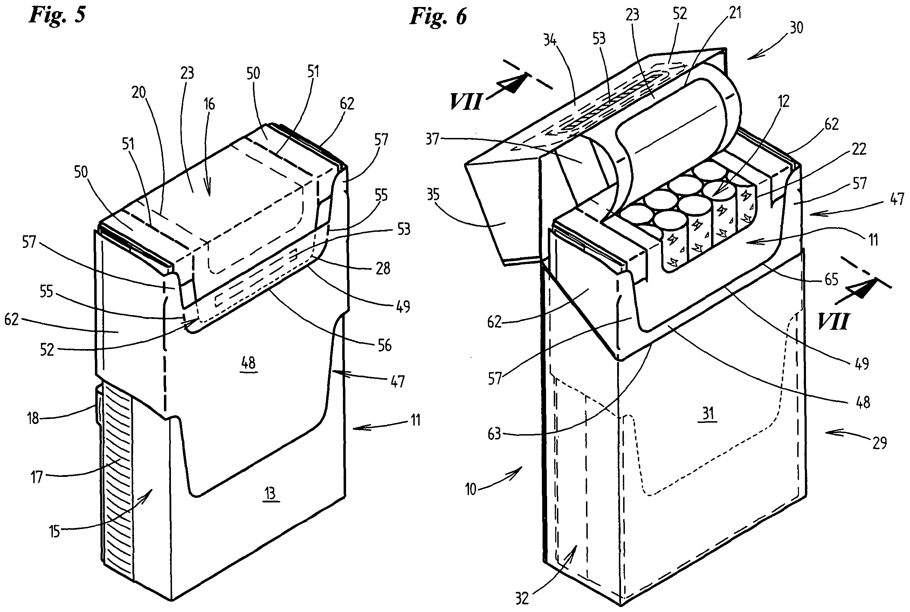

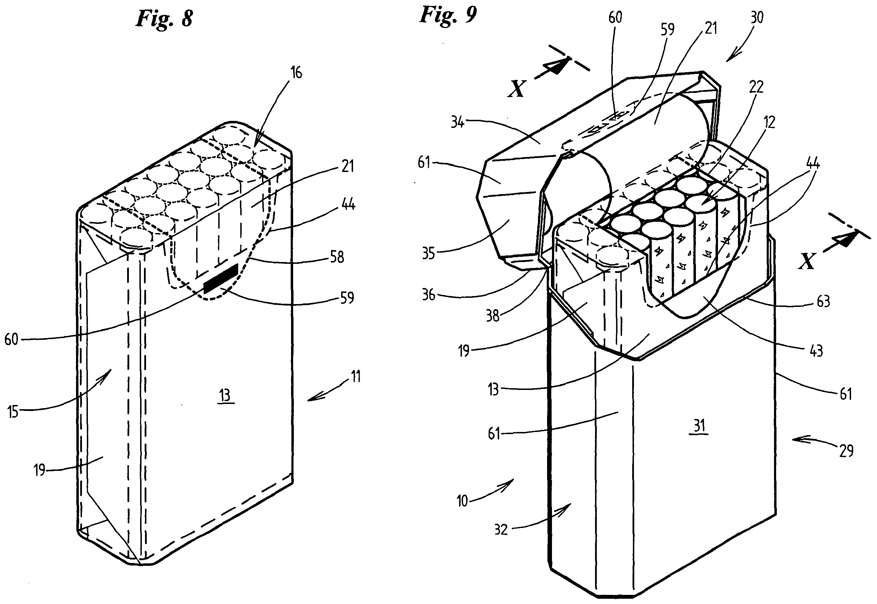

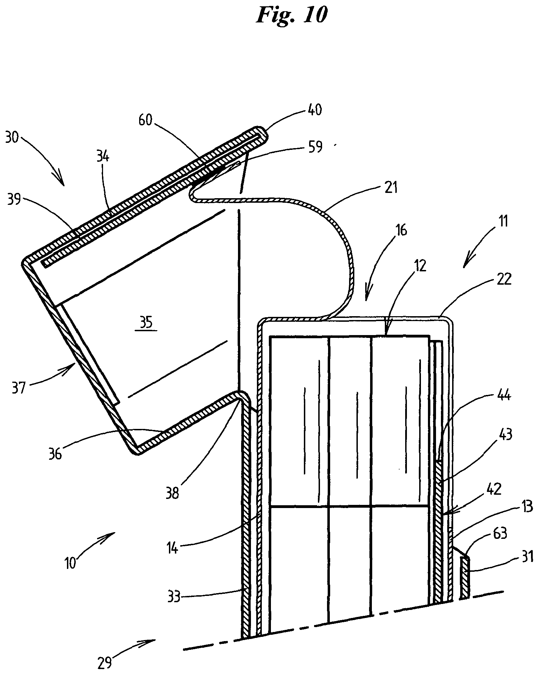

Die die Zigarettengruppe 12 allseitig umgebende Innenpackung 11 weist durch thermisches Siegeln hergestellte Verbindungs- bzw. Verschlussnähte auf. Bei dem Ausführungsbeispiel gemäß Fig. 1 bzw. gemäß Fig. 5 sind Seitennähte 17 im Bereich der Innen-Seitenwände 15 gebildet, und zwar in der Ausführung als Flossennaht. Weiterhin ist eine Quernaht 18 im Bereich der Innen-Rückwand 14 gebildet, ebenfalls in der Ausführung als Flossennaht. Die Quernaht 18 erstreckt sich etwa in halber Höhe der Innen-Rückwand 14. Bei der Packung gemäß Fig. 8 bis Fig. 10 ist die Innenpackung 11 mit einer bei Stanniol- bzw. Weichpackungen bekannten und üblichen Faltung im Bereich der Innen-Seitenwände 15 versehen, nämlich mit einer Kuvertfaltung 19 unter Bildung trapezförmiger Faltlappen. Diese sind ebenfalls durch thermisches Siegeln (oder durch Klebung) miteinander verbunden. Eine entsprechende Faltung befindet sich im Bereich der Innen-Bodenwand (nicht gezeigt).

Die Innenpackung 11 ist mit einer grundsätzlich bekannten Öffnungshilfe versehen. Eine Schwächungslinie, insbesondere eine Perforationslinie 20, bildet bzw. begrenzt eine Öffnungslasche 21, die sich quer über die Innen-Stirnwand 16 und in einem oberen Bereich der Innen-Vorderwand 13 erstreckt. Die Öffnungslasche 21 gibt in Öffnungsstellung eine Entnahmeöffnung 22 der Innenpackung 11 für die Entnahme von Zigaretten frei.

Das Handhabungsmittel für die mehrfach benutzbare Öffnungshilfe besteht aus einem Verschlussetikett 23. Dieses ist als Folienzuschnitt mit vorzugsweise vollflächiger Verklebung in einem oberen, stirnseitigen Bereich der Innenpackung 11 angeordnet, vorliegend mit einem Frontschenkel 24 im Bereich der Innen-Vorderwand 13, einem Stirnabschnitt 25 im Bereich der Innen-Stirnwand 16 und einem Verankerungsschenkel 26 an der Innen-Rückwand 14. Das Verschlussetikett 23 überdeckt die Öffnungslasche 21 und ist vorzugsweise vollflächig mit dieser verklebt. Ein Randstreifen 27 des Verschlussetiketts 23 ist mit Bereichen der Innenpackung 11 neben dem Verschlussetikett 23 (lösbar) verklebt. Zum Öffnen der Innenpackung 11 wird das Verschlussetikett 23 an einem Endbereich des Frontschenkels 24 - Betätigungslasche 28 - erfasst und unter Mitnahme des Verschlussetiketts 23 in die Öffnungsstellung bewegt (Fig. 2, Fig. 6).

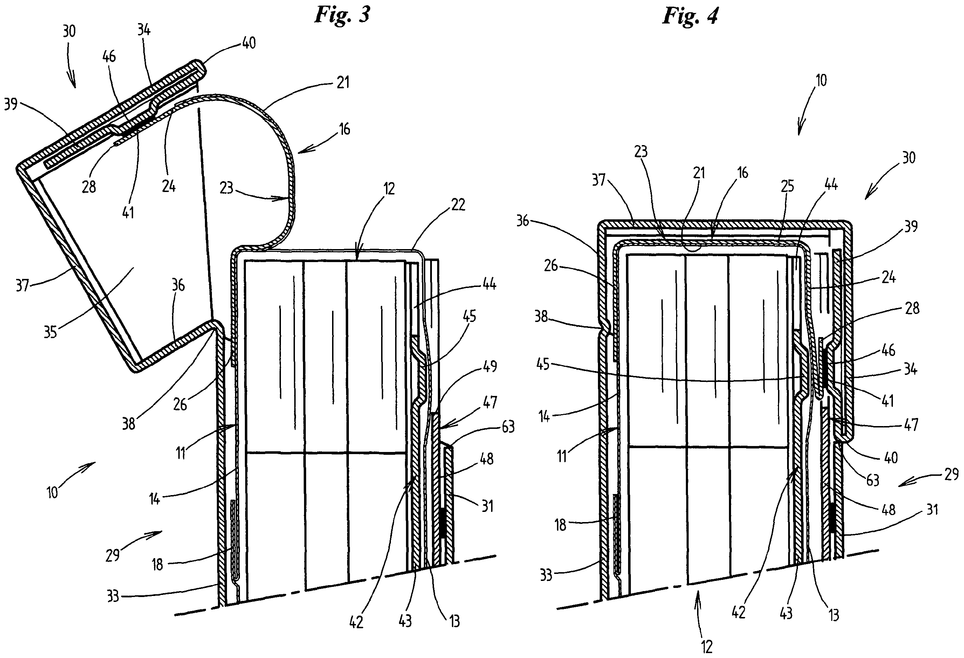

Die Betätigung des Verschlussetiketts 23 ist gemäß Fig. 1 bis Fig. 10 mit dem Öffnungs- und Schließvorgang der Außenpackung 10 gekoppelt. Diese besteht in der Ausführung als Klappschachtel aus einem Schachtelteil 29 und einem Deckel 30. Der Schachtelteil 29 weist eine Schachtel-Vorderwand 31, Schachtel-Seitenwände 32 und eine Schachtel-Rückwand 33 auf. In analoger Weise ist der Deckel 30 ausgebildet mit Deckel-Vorderwand 34, Deckel-Seitenwänden 35 und Deckel-Rückwand 36. Der obere Abschluss ist eine Deckel-Stirnwand 37. Die Deckel-Rückwand 36 ist mit der Schachtel-Rückwand 33 über ein quergerichtetes Liniengelenk 38 schwenkbar verbunden. Die Deckel-Vorderwand 34 ist bei den gezeigten Beispielen doppelwandig ausgebildet, nämlich mit einem Deckel-Innenlappen 39 versehen, der unter Bildung einer Deckelkante 40 gegen die Innenseite der Deckel-Vorderwand 34 gefaltet und mit dieser (durch Klebung) verbunden ist.

Das Verschlussetikett 23 ist mit dem Deckel 30 derart verbunden, dass beim Öffnen desselben das Verschlussetikett 23 - unter Mitnahme der Öffnungslasche 21 - ebenfalls in die Öffnungsstellung gezogen wird. Zu diesem Zweck ist das Verschlussetikett 23 mit der Innenseite der Deckel-Vorderwand 34 (dauerhaft und mit ausreichender Haltbarkeit) verbunden, insbesondere mit der Innenseite des Deckel-Innenlappens 39. Die Betätigungslasche 28 ist vorzugsweise mit punkt- bzw. streifenförmigen Leimfeldern versehen, die eine haltbare Verbindung zwischen Verschlussetikett 23 und Deckel 30 bewirken.

Es sind Maßnahmen vorgesehen, die insbesondere bei der Herstellung der Packung bzw. bei der Positionierung der Deckel-Vorderwand 34 in der packungsgemäßen Schließstellung einen örtlichen Anpressdruck erzeugen zur Herstellung der (Leim-)Verbindung zwischen Verschlussetikett 23 bzw. Betätigungslasche 28 und Deckel-Vorderwand 34, vorzugsweise mit dem Deckel-Innenlappen 39.

Bei dem Ausführungsbeispiel gemäß Fig. 1 bis Fig. 5 sind zusammenwirkende Packungsteile mit Vorsprüngen, Verdickungen, Erhöhungen oder dergleichen versehen, die örtlich einen erhöhten Druck bei geschlossenem Deckel 30 erzeugen, um die (Klebe-)Verbindung zu bewirken. Bei dem Ausführungsbeispiel ist die Innenpackung 11 mit einem Innenkragen 42 versehen. Dieser besteht vorzugsweise aus (dünnem) Karton und ist beispielsweise trayartig ausgebildet mit einer Tray-Vorderwand 43, Seitenlappen bzw. Seitenwänden, Bodenwand und ggf. Rückwand. Der Einfachheit halber ist in den Zeichnungen nur die Tray-Vorderwand 43 - innerhalb der Dichtpackung 11 - gezeigt. Die Vorderwand 43 erstreckt sich vorzugsweise über die volle Höhe der Innenpackung 11. Des Weiteren ist in einem oberen Bereich eine Ausnehmung 44 gebildet entsprechend der üblichen Ausnehmung eines standardmäßigen Kragens einer Klappschachtel.

Eine erste, nach außen gerichtete Erhöhung bzw. ein lokaler Vorsprung 45 ist am Innenkragen 42 angebracht, und zwar im Bereich der Tray-Vorderwand 43. Der als wulstartige Prägung ausgebildete Vorsprung 45 befindet sich in einem oberen Bereich der Vorderwand 43, unmittelbar unterhalb der Ausnehmung 44, und zwar in Höhe der Verbindung der Betätigungslasche 28 mit dem Deckel 30 bzw. mit dem Deckel-Innenlappen 39. Die Betätigungslasche 28 ist bei diesem Ausführungsbeispiel umgefaltet, so dass eine Innenseite des Verschlussetiketts 23 nach außen gerichtet ist. Das Leimfeld 41 befindet sich demnach aufgrund der Faltung der Betätigungslasche 28 an der Außenseite und wird beim Schließen des Deckels 30 bzw. beim Falten der Deckel-Vorderwand 34 an den Deckelinnenlappen 39 gedrückt.

Die Außenpackung 10 ist vorzugsweise mit einem Gegendruckteil versehen. Die Deckel-Vorderwand 34 weist an der Innenseite einen Gegenvorsprung 46 auf. Dieser befindet sich vorzugsweise in Höhe des Vorsprungs 45 und erhöht den auf die Verbindungsstelle des Verschlussetiketts 23 wirkenden (beidseitigen) Anpressdruck. Die Betätigungslasche 28 wird mittels Leimfeld 41 im Bereich des Gegenvorsprungs 46 mit der Deckel-Vorderwand 34 verbunden. Eine weitere Besonderheit besteht darin, dass der vorzugsweise durch Prägen hergestellte Gegenvorsprung 46 im Bereich des Deckelinnenlappens 39 gebildet ist, so dass eine nach innen versetzte Verbindungsstelle für die Betätigungslasche 28 mit der Deckelvorderwand 34 geschaffen ist.

Die Außenpackung 10 ist als (standardmäßige) Klappschachtel ausgebildet, und zwar mit einem üblichen Kragen 47 mit einer Kragen-Vorderwand 48 und Kragen-Seitenlappen 62. Die Kragen-Vorderwand 48 weist eine bei diesem Packungstyp übliche stirnseitige Ausnehmung 49 auf, die den Zugang zum Packungsinhalt erleichtert. Die Befestigung der Betätigungslasche 28 liegt vorzugsweise im Bereich dieser Ausnehmung 49, ebenso die Vorsprünge 45, 46. Das Verschlussetikett 23 ist vorzugsweise so ausgebildet, dass seitlich streifenförmige Erweiterungen gebildet sind, nämlich Haltestreifen 50. Diese erstrecken sich im Bereich der Innen-Stirnwand 16, vorzugsweise derart, dass die gesamte Fläche der Innen-Stirnwand 16 durch das Verschlussetikett 23 abgedeckt ist. Kurze Schenkel verlaufen in die Innen-Vorderwand 13 und - nicht dargestellt - bis in die Innen-Rückwand 14. Die Haltestreifen 50 sind durch Schwächungslinien bzw. Perforationslinien 51 von einem mittleren Hauptteil des Verschlussetiketts 23 abgegrenzt und werden beim erstmaligen Öffnen von diesem abgetrennt, bleiben also in dauerhafter, klebender Verbindung mit der Innenpackung 11 (Fig. 2).

Die Packung gemäß Fig. 5 bis Fig. 7 ist hinsichtlich der Außenpackung 10 und der Innenpackung 11 in weitgehender Übereinstimmung mit dem voranstehend beschriebenen Ausführungsbeispiel ausgebildet. Hinsichtlich der Verbindung des Verschlussetiketts 23 bzw. der Betätigungslasche 28 mit dem Deckel 30 der Außenpackung 10 wird der Kragen 47 der Außenpackung 10 herangezogen. Im Bereich der vorzugsweise konventionell gestalteten Ausnehmung 49 der Kragen-Vorderwand 48 befindet sich ein Verbindungsstück 52 zum Fixieren der Betätigungslasche 48 (an der Innenseite) und zur Verbindung derselben mit dem Deckel 30 bzw. der Innenseite der Deckel-Vorderwand 34.

Das Verbindungsstück 52 kann als gesondertes Teilstück mittels Leimfeld 41 bzw. Leimstreifen 53 mit dem Verschlussetikett 23, insbesondere mit der Betätigungslasche 28, verbunden sein. Diese ist bei dem vorliegenden Beispiel nicht gefaltet, sondern liegt mit der (im Übrigen leimfreien) Außenseite an dem Verbindungsstück 52 an bzw. ist mit diesem verbunden. Das Verbindungsstück 52 ist vorzugsweise bei der Herstellung der Packung, insbesondere bei der abschließenden Faltung der Deckel-Vorderwand 32, mit dieser ebenfalls über Leim, vorliegend über zwei Leimstreifen 54, verbunden. Auch hier erfolgt die Verbindung mit der Innenseite des Deckel-Innenlappens 39. Das Verbindungsstück 52 wirkt dabei als Distanzausgleich zwischen Deckel 30 bzw. Deckelinnenlappen 39 einerseits und Betätigungslasche 28 des Verschlussetiketts 23 andererseits.

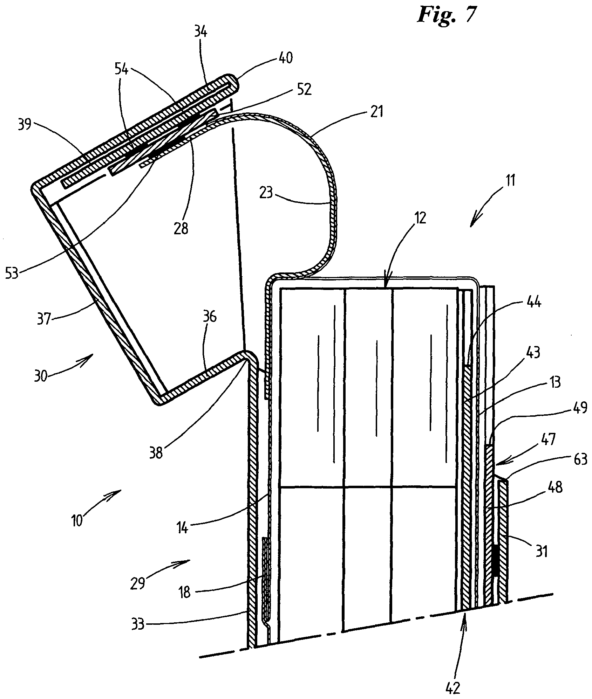

Das Verbindungsstück 52 ist vorzugsweise (ursprünglich) mit dem Zuschnitt des Kragens 47 verbunden, und zwar mit der Kragen-Vorderwand 48 im Bereich der Ausnehmung 49. Das Verbindungsstück 52 ist als Streifen ausgebildet, der an die Kontur der Ausnehmung 49 angepasst ist. Die Verbindung mit dem Kragen 47 ist so ausgebildet, dass eine leichte Abtrennung möglich ist, nämlich beim erstmaligen Öffnen des Deckels 30. Das Verbindungsstück 52 ist über durch Stanzungen begrenzte Restverbindungen 55 mit dem Kragen 47 verbunden. Vorliegend ist eine durchgehende Stanzlinie 56 im Bereich einer quer gerichteten Kante der Ausnehmung 49 entsprechend der Kontur derselben angeordnet. Lediglich im Bereich aufrechter Schenkel, nämlich im Bereich von Stegen 57 des Kragens 47, befinden sich die Restverbindungen 55, die die Einheit des Verbindungsstücks 52 mit dem Kragen 47 bis zur Fertigstellung der Packung gewährleisten, andererseits aber beim Öffnen des Deckels 30 die in üblicher Weise ausgebildete Ausnehmung 49 freigeben. Das Verbindungsstück 52 bleibt dauerhaft in Verbindung mit der Innenseite der Deckel-Vorderwand 34 (Fig. 7).

Eine besondere (Zigaretten-)Packung mit selbsttätiger Öffnung einer (dichten) Innenpackung 11 ist in Fig. 8 bis Fig. 10 gezeigt. Die Außenpackung 10 ist eine vereinfachte Version einer Klappschachtel bzw. Hinge Lid Packung, und zwar fehlt der sonst übliche Kragen. Die Innenpackung 11 ist vorzugsweise mit einem Innenkragen 42 versehen.

Die Innenpackung 11 weist eine Öffnungslasche 21 auf, die durch eine Schwächungslinie 58 begrenzt ist. Diese ist vorzugsweise so ausgebildet, dass bei einer mehrlagigen Folie der Innenpackung 11 nur einzelne Lagen mit Stanzlinien bzw. Perforationen versehen sind, jedoch mindestens eine Lage bzw. Schicht der Folie unversehrt bleibt, so dass die Innenpackung 11 im Ursprungszustand auch im Bereich der Öffnungslasche 21 dicht ist.

Zum Öffnen der Innenpackung 11 wird die Öffnungslasche 21 unmittelbar erfasst und in die Öffnungsstellung gezogen. Die Öffnungslasche 21 ist vorzugsweise so ausgebildet, nämlich konturiert, dass ein unteres Ende im Bereich der Innen-Vorderwand 13 leicht erfasst werden kann. Der Endbereich der Öffnungslasche 21 ist hier als Zunge 59 geformt. Die Abmessungen der Öffnungslasche 21 sind zweckmäßigerweise so gewählt, dass die Zunge 59 bzw. ein unterer Teil derselben im Bereich der Tray-Vorderwand 43 des Innenkragens 42 liegt, und zwar unterhalb der Ausnehmung 44 der Vorderwand 43.

Die Öffnungslasche 21 der Innenpackung 11 ist mit dem Deckel 30 verbunden, nämlich mit der Deckel-Vorderwand 34. Diese ist vorzugsweise konventionell mit einem Deckelinnenlappen 39 versehen. An diesem ist die Öffnungslasche 21 befestigt, vorliegend mit einem Leimstreifen 60. Dieser ist an der Außenseite der Innenpackung 11 im Bereich der Öffnungslasche 21 angebracht, und zwar im Bereich der Zunge 59, vorzugsweise unterhalb einer quer gerichteten Kante der Ausnehmung 44 des Innen-Trays 42.

Bei der Fertigung der Packung 10, nämlich beim Positionieren des Deckels 30 mit der Deckel-Vorderwand 34 in der Schließstellung, befindet sich der Deckelinnenlappen 39 in unmittelbarer Nachbarschaft der Innenpackung 11, nämlich der Zunge 59 der Öffnungslasche 21. Durch den Anlagedruck beim Faltvorgang wird die Verbindung mit dem an der Außenseite aufgebrachten Leimstreifen 60 hergestellt. Beim (erstmaligen) Öffnen des Deckels 30 wird die Öffnungslasche 21 aus der Verbindung mit dem Zuschnitt der Innenpackung 11 herausgetrennt. Die Innenpackung 11 wird so geöffnet (Fig. 9). Die Entnahme der Zigaretten ist aufgrund der Entnahmeöffnung 22 und der Ausnehmung 44 des Innenkragens 42 erleichtert.

Bei dieser Ausführung fehlt eine Abdeckung der Innen-Seitenwände 15 der Innenpackung 11 im Bereich oberhalb bzw. außerhalb des Schachtelteils 29. Vorteilhafterweise sind deshalb im Bereich dieser Innen-Seitenwände 15 Kuvertfaltungen 19 der Innenpackung 11 gebildet, die bei geöffnetem Deckel das Bild einer üblichen Innenumhüllung aus beispielsweise Stanniol vermitteln. Die Faltlappen der Kuvertfaltung 19 sind vorzugsweise durch thermisches Siegeln miteinander verbunden.

Weiterhin besteht eine Besonderheit darin, dass die Außenpackung 10 dieser Packungsausführung mit abgeschrägten aufrechten Packungskanten, also Schrägkanten 61 versehen ist, und zwar durchgehend im Bereich von Schachtelteil 29 und Deckel 30. Die Packung ist somit als Achteck- bzw. Oktagonalpackung ausgebildet. Auch der Innenkragen 42 ist an diese Kontur der Außenpackung 10 angepasst.

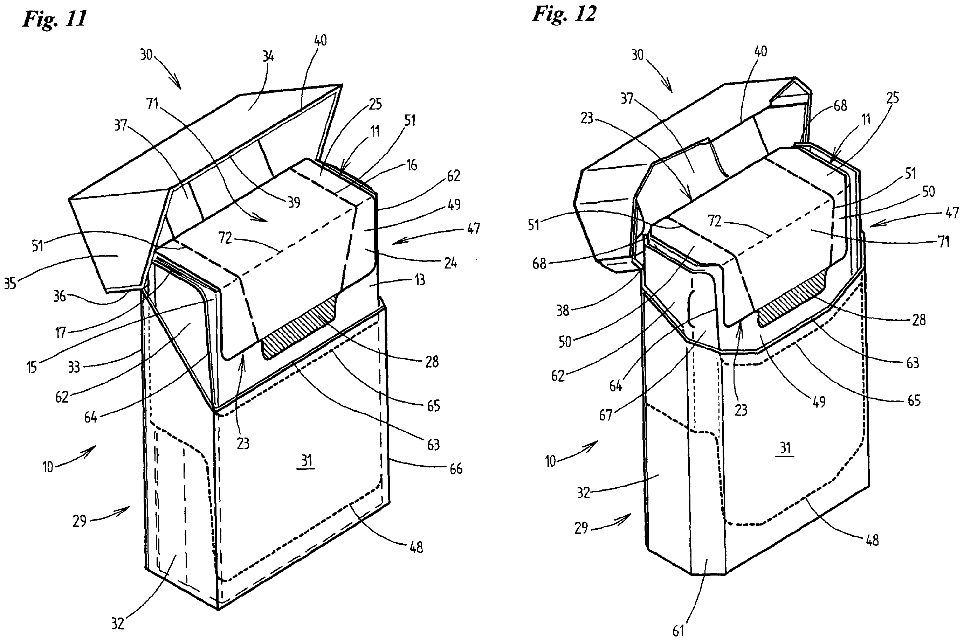

Eine Besonderheit der Packungen gemäß Fig. 11 bis Fig. 13 besteht darin, dass Maßnahmen für eine erleichterte, präzise Anbringung des Verschlussetiketts 23 und für eine erleichterte Handhabung durch den Verbraucher verwirklicht sind sind. Das Verschlussetikett 23 kann in beliebiger Weise ausgebildet sein, auch als streifenförmiger Zuschnitt. Bei den gezeigten Packungsbeispielen sind besonders gestaltete Verschlussetiketten 23 eingesetzt.

Eine besondere Ausbildung bezieht sich auf die Gestaltung des Kragens 47 der als Klappschachtel ausgebildeten Außenpackung 10. Die von der Kragen-Vorderwand 48 und den Kragen-Seitenlappen 42 begrenzte Ausnehmung 49 ist vergrößert bzw. erweitert, insbesondere derart, dass sie sich (etwa) über die volle Breite der Packungsvorderseite, also über die volle Breite der Kragen-Vorderwand 48 erstreckt. Dadurch liegt der obere, stirnseitige Bereich der Innenpackung 11 frei, insbesondere bis zu einer oberen Begrenzungskante bzw. quergerichteten Schließkante 63 des Schachtelteils 29, nämlich der Schachtel-Vorderwand 31. Es steht dadurch ein großflächiger Bereich für die Anbringung, aber auch für die Handhabung des Verschlussetiketts 23 zur Verfügung.

Bei dem Ausführungsbeispiel der Fig. 11 wird durch entsprechende Ausnehmung 49 der Kragen-Vorderwand 48 die volle freie Fläche der Innenpackung 11 bzw. der Innen-Vorderwand 13 oberhalb der Schachtel-Vorderwand 31 freigehalten. Bei geöffnetem Deckel 30 sind lediglich die Kragen-Seitenlappen 62 im Bereich der Deckel-Seitenwände 35 sichtbar. Diese sind in besonderer Weise ausgebildet, nämlich einer schräg liegenden, gegenüber der quaderförmigen Innenpackung 11 leicht zurückgesetzten Lappenkante 64. Die Kragen-Seitenlappen 62 sind demnach im oberen Bereich mit einem konvergierenden Querprofil ausgebildet und mit einer Rundung im Übergang zur horizontalen Oberkante. Die Stabilität der Packung auch hinsichtlich der Schließstellung des Deckels 30 wird vorzugsweise ein entsprechend ausgebildetes Stützorgan innerhalb der Innenpackung gewährleistet, insbesondere durch einen Innenkragen.

Der Kragen 47 ist bei diesem Ausführungsbeispiel mit einer unteren Begrenzung der Ausnehmung 49 versehen, die als quergerichtete, vorzugsweise gradlinige Kragenkante 65 in Höhe der Schließkante 63 oder - wie gezeigt - unterhalb derselben verläuft. Die Kragen-Vorderwand 48 erstreckt sich nahezu bis in den Bereich einer Bodenwand der Außenpackung, passend zu Größe und Kontur der Ausnehmung 49. Die Außenpackung ist vorliegend exakt quaderförmig ausgebildet, also im Querschnitt rechtwinkligen aufrechten Packungskanten 66.

Fig. 12 betrifft ein Ausführungsbeispiel, dass vorteilhafterweise bei einer Klappschachtel als Außenpackung 10 mit Schrägkanten 61 - analog zu Fig. 9 - ausgebildet ist. Der Kragen 47 ist an diese Packungskontur angepasst, wobei die Kragen-Seitenlappen 62 im Bereich der frontseitigen Schrägkanten 61 Schrägschenkel 67 aufweisen, die gegenüber den Kragen-Seitenlappen 62 unter einem stumpfen Winkel gerichtet sind, entsprechend der Form der Schrägkanten 61. Die Ausnehmung 49 ist demnach bei dieser Ausführung durch die Schrägschenkel 67 begrenzt bzw. durch deren Lappenkante 64, die vorzugsweise schräg gerichtet ist, mit zur Deckel-Stirnwand 37 konvergierender Breite. Vorzugsweise ist bei dieser Packungsform auch ein rückseitiger Lappenschenkel 68 im Bereich rückseitiger Schrägkanten 61 an den Kragen-Seitenlappen 62 angeordnet.

Die Kragenkante 65 liegt auch bei diesem Ausführungsbeispiel vorzugsweise unterhalb der Schließkante 63. Beide Kanten 63 und 65 sind - vorzugsweise parallel verlaufend - poligonartig ausgebildet mit jeweils unter einem stumpfen Winkel zueinander gerichteten Katenabschnitten, zu den Seitenwänden 32 aufwärts gerichtet.

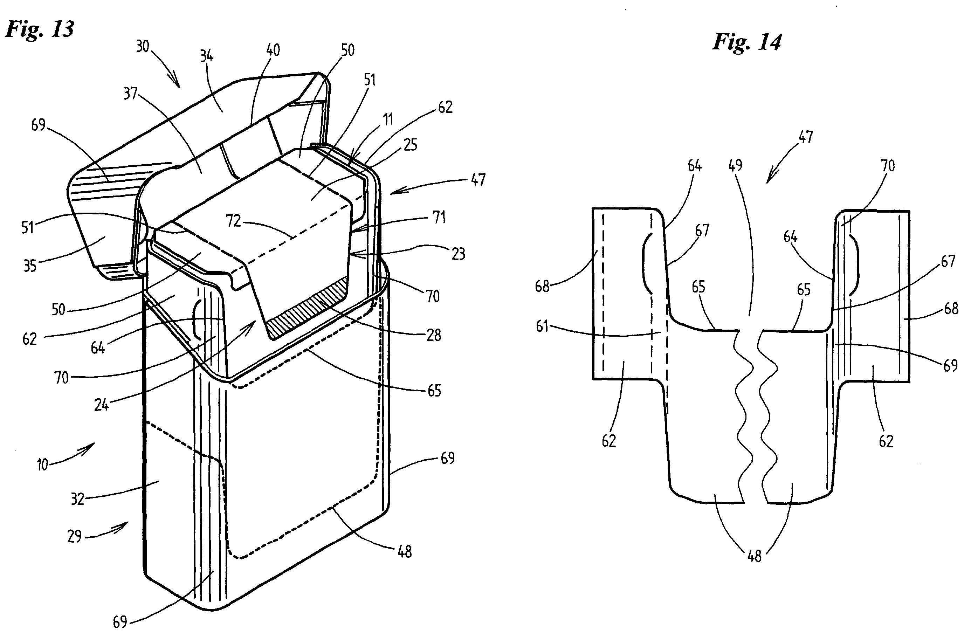

Fig. 13 zeigt eine zu Fig. 12 analog ausgebildete Packung, bei der die aufrechten Packungskanten als Rundkanten 69 ausgebildet sind, und zwar unter Abstimmung auf die Abmessung von Zigaretten. Die Rundkanten 69 erstrecken sich auch im Bereich des Deckels 30, vorzugsweise frontseitig und rückseitig.

Der Kragen 47 ist an diese Packungsgestaltung angepasst. Die Ausnehmung 49 ist seitlich durch Rundschenkel 70 begrenzt, die die Innenpackung 11 in diesem Bereich umfassen. Die beidseitigen Rundschenkel 70 sind durch Lappenkanten 64 begrenzt, die vorzugsweise analog zu Fig. 12 schräg gerichtet sind unter Bildung einer zur Stirnseite divergierenden Breite der Ausnehmung 49. Eine quergerichtete Kragenkante 64 zur Begrenzung der Ausnehmung 49 erstreckt sich vorzugsweise mit geringem Abstand unterhalb der ebenfalls quer gerichteten Schließkante 63 des Schachtelteils 29. Beide Kanten 63, 65 sind vorzugsweise gradlinig und parallel zueinander angeordnet.

Fig. 14 zeigt einen ausgebreiteten Zuschnitt für einen Kragen 47, und zwar in der linken Hälfte in der Ausführung für eine Klappschachtel mit Schrägkanten 61 und in der rechten Hälfte in der Ausführung für Klappschachteln mit Rundkanten 69.

Die bei diesen Packungen eingesetzten Verschlussetiketten 23 können in beliebiger Weise, auch als streifenförmige Zuschnitte, ausgebildet sein, vorzugsweise unter Bildung von Frontschenkel 24, Stirnabschnitt 25 und Rückseitigem Verankerungsschenkel 26.

Eine Besonderheit sind die Verschlussetiketten 23 gemäß Fig. 11 und Fig. 12. Die Verschlussetiketten 23 erstrecken sich (etwa) über die volle Breite der Innenpackung 11, wobei vorzugsweise die Innenstirnwand 16 vollflächig gedeckt ist und ebenso ein oberer, zur Innen-Stirnwand 16 benachbarter Bereich der Innen-Vorderwand 13. Bei dem Beispiel gemäß Fig. 5 ist der Stirnabschnitt 25 end- bzw. randseitig durch Schrägschnitte an die Kontur der Außenpackung (10) (Oktagonalpackung), angepasst. Der Frontschenkel 24 ist mit geringfügig reduzierter Breite ausgebildet unter Einhaltung eines geringfügigen Abstands von den Lappenkanten 64. Im Bereich eines hinteren Querrandes befindet sich die (klebstofffreie) Betätigungslasche (28), die hier vorzugsweise von Hand zu erfassen ist.

Die Verschlussetiketten 23 können mit voller Breite in die Öffnungs- und Schließstellung bewegt werden. Bei den vorliegend gezeigten Ausführungsbeispielen wird ein Hauptstreifen 71 des Verschlussetiketts 23 erfasst und von den seitlichen Haltestreifen 50 abgetrennt. Die Haltestreifen 50 sind bei den vorliegenden Beispielen durch die Perforationslinien 51 von den Haltestreifen 50 abtrennbar beim (erstmaligen) Öffnen des Verschlussetiketts 23. Die Perforationslinien 51 erstrecken sich vorzugsweise mindestens im Bereich der Schenkel 24 und 25 des Verschlussetiketts 23.

Bei den besonderen Verschlussetiketten 23 gemäß Fig. 11, Fig. 12 verlaufen die Perforationslinien 51 - ausgehend von der Betätigungslasche 28 - divergierend, so dass der Hauptstreifen 71 mindestens im Bereich der Innen-Stirnwand 16 eine größere Breite aufweist als die Betätigungslasche 28. Die Haltestreifen 50 erstrecken sich bei diesem Ausführungsbeispiel über die gesamte Länge des Verschlussetiketts.

Eine weitere Besonderheit besteht darin, dass quergerichtete Faltlinien 72 bei vorzugsweise allen Ausführungen des Verschlussetiketts 23 als Schwächungslinie des Etikettenmaterials (Folie) ausgebildet sind, wobei Perforationsschnitte in einem Teil-Querschnitt der Folie gebildet sind, jedenfalls unter Erhaltung einer innenliegenden Dichtlage der mehrlagigen Folie. Dadurch ist die Faltung erleichtert, ohne die Wichtigkeit des Verschlussetiketts 23 zu beeinträchtigen.

Die Innenpackung 11 ist bei diesen Ausführungsbeispielen vorzugsweise in der im Zusammenhang mit Fig. 1 bis Fig. 10 beschriebenen Weise ausgebildet, also insbesondere mit einem Innenkragen 42. Des Weiteren können die (großflächigen) Verschlussetiketten 23 in der Ausführung gemäß Fig. 11, Fig. 12 auch bei den Packungen der Fig. 1 bis Fig. 7 eingesetzt werden.

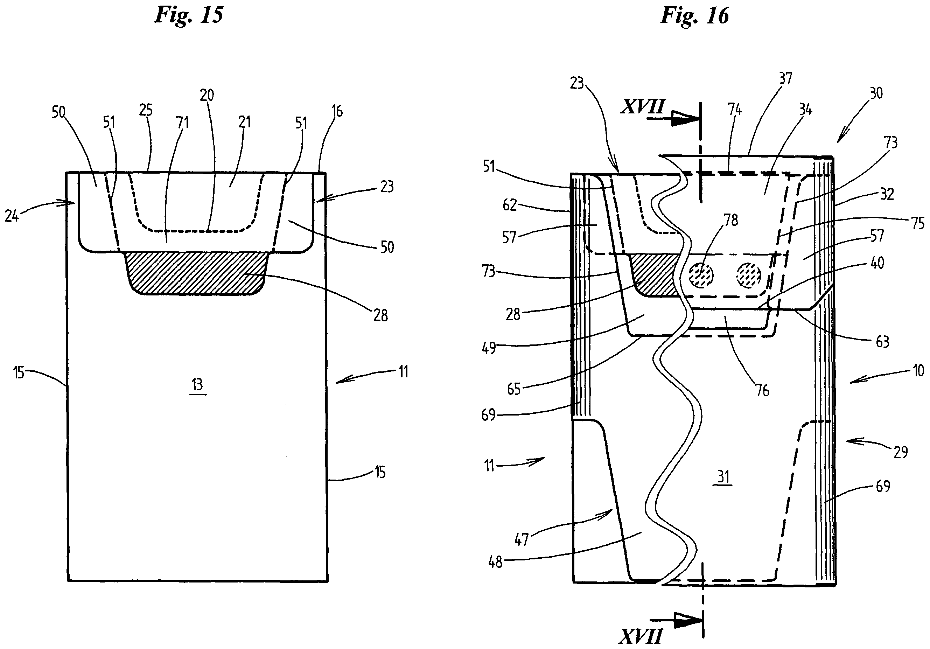

Weitere Besonderheiten hinsichtlich der Ausbildung von (Zigaretten-)Packungen mit einer Außenpackung 10 in der Ausführung als Klappschachtel/Hinge Lid Pack und einer Innenpackung 11 vorzugsweise als Dichtblock zeigen Fig. 15 bis Fig. 20.

Fig. 15 ist die Frontansicht einer Innenpackung 11 in der Ausführung als Dichtblock. Das hinsichtlich des Frontschenkels 24 sichtbare Verschlussetikett 23 entspricht hier (etwa) der Ausführung gemäß Fig. 11 und Fig. 12.

Die Besonderheit betrifft vorrangig die Ausbildung der Außenpackung 10, vorliegend beispielhaft in der Ausführung mit Rundkanten 69. Der - aus einem gesonderten Zuschnitt bestehende - Kragen 47 ist mit einer im Prinzip üblichen Ausnehmung 49 versehen, die von seitlichen Stegen 57 im Bereich der Frontseite der Packung (Kragen-Vorderwand 48) begrenzt ist. Die Ausnehmung 49 bzw. die Stege 57 sind in diesem Bereich durch schräggerichtete Stegkanten 73 begrenzt, die eine zur Stirnseite divergierende Ausnehmung 49 begrenzen. Die Ausnehmung 49 erstreckt sich vorzugsweise bis in einen Bereich unterhalb der Schließkante 63 der Schachtel-Vorderwand 31. Die quergerichtete Kragenkante 65 ist geradlinig.

Das Verschlussetikett 23 ist mindestens mit der Betätigungslasche 28 im Bereich der Ausnehmung 49 der Kragen-Vorderwand 48 angeordnet, kann demnach beispielsweise von Hand erfasst werden - bei geöffnetem Deckel 30. Weiterhin erstrecken sich die den Hauptstreifen 71 der Öffnungslasche 21 begrenzenden Perforationslinien 51 innerhalb der Ausnehmung 49, vorzugsweise parallel zu den Stegkanten 73. Bei Betätigen der Öffnungslasche 21 - und beim Heraustrennen des Hauptstreifens 71 - bleiben demnach die seitlichen Bereiche des Verschlussetiketts 23, also vorliegend die Haltestreifen 50, überwiegend im Bereich der Stege 57, sind von diesen verdeckt.

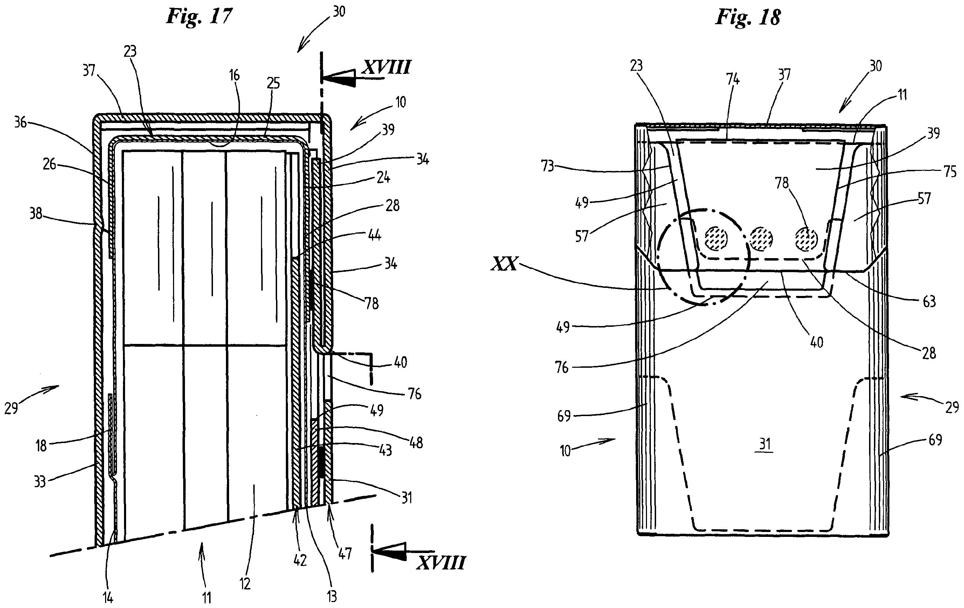

Der Deckel-Innenlappen 39 der Außenpackung 10 ist in besonderer Weise ausgebildet und angeordnet, nämlich derart, dass bei geschlossenem Deckel der Deckel-Innenlappen 39 (fast) vollständig innerhalb der Ausnehmung 49 der Kragen-Vorderwand 48 liegt, also insbesondere ohne wechselseitige Überdeckung. Dadurch wird erreicht, dass der Deckel-Innenlappen 39 bei geschlossenem Deckel 30 (etwa) mit der Kragen-Vorderwand 48 bündig liegt (insbesondere Fig. 17). Dies führt zu einer besseren Schließstellung des Deckels 30.

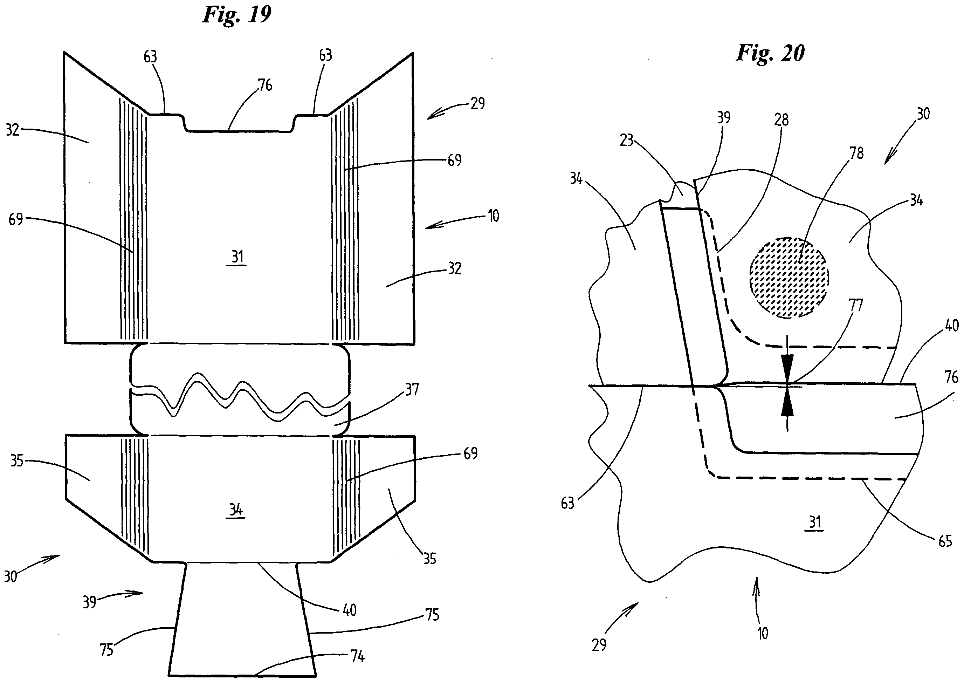

Bei Ausbildung eines Kragens 47 mit einer Ausnehmung 49, die sich - in der Breite - nur über einen Teilbereich der Kragen-Vorderwand 48 erstreckt, muss der Deckel-Innenlappen 39 mindestens hinsichtlich der Größe und Positionierung an die Ausnehmung 49 angepasst sein, vorzugsweise auch hinsichtlich der Kontur. Bei der - vorzugsweise - trapezförmigen Kontur der Ausnehmung 49 (Fig. 16, Fig. 18) ist der Deckel-Innenlappen 39 vorzugsweise ebenfalls trapezförmig ausgebildet (Fig. 19) mit einer Außenkante 74 die größer bzw. länger ist als eine Verbindungslinie des Deckel-Innenlappens 39 mit der Deckel-Vorderwand 34, also mit der durch Falten gebildeten Deckelkante 40. Die Abmessung des Deckel-Innenlappens 39 in Längsrichtung des Zuschnitts ist vorzugsweise so gewählt, dass sich der (gefaltete) Deckel-Innenlappen 39 annähernd über die volle Abmessung (Höhe) der Deckel-Vorderwand 34 erstreckt. Schräg bzw. konvergierend verlaufende Seitenkanten 75 des Deckel-Innenlappens 39 sind vorliegend parallel zu den Stegkanten 73 und mit Abstand von diesen angeordnet.

Als weitere Besonderheit ist im Bereich der Schließkante 63, vorzugsweise mittig, ein Fenster 76 gebildet. Dieses besteht aus einer Vertiefung bzw. aus einem Ausschnitt am freien Rand der Schachtel-Vorderwand 31 (Fig. 19). Das Fenster 76 ist eine Unterbrechung der Schließkante 63, also eine Unterbrechung der Anlage der Deckelkante 40 an der Schließkante 63 des Schachtelteils 29. Im Bereich des Fensters 76 ist die Innenpackung 11 bzw. die Innen-Vorderwand 13 sichtbar. Die Ausnehmung 49 der Kragen-Vorderwand 48 ist vorzugsweise so bemessen und/oder gestaltet, dass das Fenster 76 vollständig innerhalb des Bereichs der Ausnehmung 49 liegt. Die Abmessung des Fensters 76 entlang der Schließkante 63 ist so gewählt, dass die Deckelkante 40, also die Faltkante des Deckel-Innenlappens 39 mit der Deckel-Vorderwand 34, weitgehend der Abmessung des Fensters 76 in Querrichtung der Packung entspricht. Durch die als Faltkante ausgebildete Deckelkante 40 ergibt sich ein geringfügiger Versatz 77, der aufgrund des Fensters 76 unauffällig bleibt.

Bei dem vorliegenden Beispiel ist die Betätigungslasche 28 durch Klebung - Leimpunkte 78 - mit der Innenseite der Deckel-Vorderwand 34 verbunden, insbesondere mit dem Deckel-Innenlappen 39.

**Bezugszeichenliste**

| | | | |
|---|---|---|---|
| 10 | Außenpackung | 45 | Vorsprung |
| 11 | Innenpackung | 46 | Gegenvorsprung |
| 12 | Zigarettengruppe | 47 | Kragen |
| 13 | Innen-Vorderwand | 48 | Kragen-Vorderwand |
| 14 | Innen-Rückwand | 49 | Ausnehmung |
| 15 | Innen-Seitenwand | 50 | Haltestreifen |
| 16 | Innen-Stirnwand | 51 | Perforationslinie |
| 17 | Seitennaht | 52 | Verbindungsstück |
| 18 | Quernaht | 53 | Leimstreifen |
| 19 | Kuvertfaltung | 54 | Leimstreifen |
| 20 | Perforationslinie | 55 | Restverbindung |
| 21 | Öffnungslasche | 56 | Stanzlinie |
| 22 | Entnahmeöffnung | 57 | Steg |
| 23 | Verschlussetikett | 58 | Schwächungslinie |
| 24 | Frontschenkel | 59 | Zunge |
| 25 | Stirnabschnitt | 60 | Leimstreifen |
| 26 | Verankerungsschenkel | 61 | Schrägkante |
| 27 | Randstreifen | 62 | Kragen-Seitenlappen |
| 28 | Betätigungslasche | 63 | Schließkante |
| 29 | Schachtelteil | 64 | Lappenkante |
| 30 | Deckel | 65 | Kragenkante |
| 31 | Schachtel-Vorderwand | 66 | Packungskanten |
| 32 | Schachtel-Seitenwand | 67 | Schrägschenkel |
| 33 | Schachtel-Rückwand | 68 | Lappenschenkel |
| 34 | Deckel-Vorderwand | 69 | Rundkante |
| 35 | Deckel-Seitenwand | 70 | Rundschenkel |
| 36 | Deckel-Rückwand | 71 | Hauptstreifen |
| 37 | Deckel-Stirnwand | 72 | Faltlinie |
| 38 | Liniengelenk | 73 | Stegkante |
| 39 | Deckel-Innenlappen | 74 | Außenkante |
| 40 | Deckelkante | 75 | Seitenkante |
| 41 | Leimfeld | 76 | Fenster |
| 42 | Innenkragen | 77 | Versatz |
| 43 | Tray-Vorderwand | 78 | Leimpunkte |
| 44 | Ausnehmung | | |

## Patentansprüche

1. Packung, insbesondere für eine Zigarettengruppe (12), bestehend aus einer Innenpackung (11) aus Folie, vorzugsweise Dichtfolie und aus einer Außenpackung (10) mit einem Deckel (30), insbesondere Hinge Lid Packung bzw. Klappdeckelpackung, wobei die Innenpackung (11) eine Entnahmeöffnung (22) mit vorzugsweise mehrfach benutzbarem Verschlussetikett (23) aufweist, welches mit einem dauerhaft wirkenden Kleber an der Innenpackung (11) fixiert ist und sich vorzugsweise im Bereich einer Innen-Stirnwand (16) sowie mindestens einem angrenzenden Bereich einer Innen-Vorderwand (13) erstreckt, wobei das Verschlussetikett (23) an einem freien Endbereich eine Grifflasche bzw. Betätigungslasche (28) aufweist, die mit der Innenseite des Deckels (30) - Deckel-Vorderwand (34) - dauerhaft verbunden ist, derart, dass beim Betätigen des Deckels (30) das Verschlussetikett (23) durch den Deckel (30) in eine Öffnungs- bzw. in eine Schließstellung gezogen wird, **dadurch gekennzeichnet, dass** im Bereich der vorzugsweise durch Klebung oder durch Siegelung erzeugten Verbindung des Verschlussetiketts (23) bzw. der Betätigungslasche (28) mit der Innenseite des Deckels (30) Vorsprünge (45, 46) gebildet sind, die beim Schließen der Außenpackung (10) bzw. beim Falten des Deckels (30), insbesondere bei der Herstellung der Außenpackung (10) und/oder beim Gebrauch derselben Druck auf das Verschlussetikett (23) bzw. die Betätigungslasche (28) ausüben, derart, dass diese mit einem Verbindungsbereich an die zugeordnete Wandung der Packung - Deckel-Vorderwand (34) bzw. Deckel-Innenlappen (39) - gedrückt werden.

2. Packung nach Anspruch 1, **dadurch gekennzeichnet, dass** die Deckel-Vorderwand (34) bzw. der an der Innenseite angeordnete Deckel-Innenlappen (39) mindestens einen insbesondere durch Prägung hergestellten, nach innen - in Richtung zur Innenpackung (11) - gerichteten Vorsprung bzw. Wulst - Gegenvorsprung (46) - aufweist, an dem der Verbindungsbereich des Verschlussetiketts (23) bzw. der Betätigungslasche (28) unter Bildung einer (Klebe-)Verbindung anliegt. Wobei vorzugsweise die Außenpackung (10) in der Ausführung als Klappschachtel einen Kragen (47) aufweist mit einer Kragen-Vorderwand (48) und einer Ausnehmung (49) im Bereich der Kragen-Vorderwand (48), wobei die Vorsprünge (45, 46) im Bereich der Ausnehmung (49) der Kragen-Vorderwand (48) angeordnet sind, vorzugsweise unmittelbar oberhalb einer die Ausnehmung (49) begrenzenden Querkante.

3. Packung nach Anspruch 1 oder 2, **dadurch gekennzeichnet, dass** ein Innenzuschnitt der Innenackung (11), insbesondere ein Innenkragen (42) bzw. ein Stützorgan - Tray - innerhalb der Innenpackung (11) sich bis in den Bereich der Verbindung des Verschlussetiketts (23) mit dem Deckel (30) erstreckt und mindestens einen nach außen - zur Deckel-Vorderwand (34) - gerichteten, vorzugsweise durch Prägen hergestellten Vorsprung (45) bzw. einen Wulst aufweist, insbesondere gegenüberliegend zu und korrespondierend mit dem (Gegen-)Vorsprung (46) an der Innenseite der Deckel-Vorderwand (34), wobei vorzugsweise der in der Innenpackung (11) angeordnete Innenkragen (42) -Tray - eine Tray-Vorderwand (43) aufweist, die sich im Wesentlichen über die Höhe der Innenpackung (11) bzw. der Zigarettengruppe (12) erstreckt und in einem oberen, stirnseitigen Bereich eine Ausnehmung (45) aufweist, wobei der Vorsprung (44) unterhalb der Ausnehmung (43), vorzugsweise mittig, im Bereich der Vorderwand (43) des Innenkragens (42) angeordnet ist.

4. Packung nach Anspruch 1 oder einem der weiteren Ansprüche, **dadurch gekennzeichnet, dass** eine - im Übrigen leimfreie - Betätigungslasche (28) des Verschlussetiketts (23) durch Faltung mit einer Innenseite nach außen weist - zur Deckel-Vorderwand (34) -, wobei an der durch Faltung nach außen gerichteten Seite der Betätigungslasche (28) Leim angebracht ist, insbesondere in der Ausführung als streifenförmiges Leimfeld (41).

5. Packung nach Anspruch 1 oder einem der weiteren Ansprüche, **dadurch gekennzeichnet, dass** sich das Verschlussetikett (23) über die volle Breite bzw. Fläche mindestens der Innen-Stirnwand (16) erstreckt mit seitlichen Haltestreifen (50), die durch Perforationslinien (51) von einem mittleren Teil des Verschlussetiketts (23) - Hauptstreifen (71) abgegrenzt sind, wobei beim erstmaligen Öffnen des Deckels (30) das Verschlussetikett (23) von der Innenpackung (11) gelöst und von den Haltestreifen (50) abgetrennt wird.

6. Packung, insbesondere für eine Zigarettengruppe (12), bestehend aus einer Innenpackung (11) aus Folie, vorzugsweise Dichtfolie und aus einer Außenpackung (10) mit einem Deckel (30), insbesondere Hinge Lid Packung bzw. Klappdeckelpackung, wobei die Innenpackyng (11) eine Entnahmeöffnung (22) mit vorzugsweise mehrfach benutzbarem Verschlussetikett (23) aufweist, welches mit einem dauerhaft wirkenden Kleber an der Innenpackung (11) fixiert ist und sich vorzugsweise im Bereich einer Innen-Stirnwand (16) sowie mindestens einem angrenzenden Bereich einer Innen-Vorderwand (13) erstreckt, wobei das Verschlussetikett (23) an einem freien Endbereich eine Grifflasche bzw. Betätigungslasche (28) aufweist, die mit der Innenseite des Deckels (30) - Deckel-Vorderwand (34) - dauerhaft verbunden ist, derart, dass beim Betätigen des Deckels (30) das Verschlussetikett (23) durch den Deckel (30) in eine Öffnungs- bzw. in eine Schließstellung gezogen wird, **gekennzeichnet durch** ein Ausgleichsstück bzw. Verbindungsstück (52) aus dickwandigem Material, insbesondere aus Karton, an der Innenseite der Außenpackung (10) bzw. an der Innen-Vorderwand (13) im Bereich der Betätigungslasche (28), die mit dem Ausgleichs- bzw. Verbindungsstück (52) (durch Klebung) verbunden ist, wobei das Verbindungsstück (52) vorzugsweise an der freien Außenseite mit der Innenseite der Deckel-Vorderwand (34) bzw. dem Deckel-Innenlappen (39) verbunden ist, derart, dass beim Öffnen des Deckels (30) das Verschlussetikett (23) bzw. dessen Betätigungslasche (28) mit dem Verbindungsstück (52) erfassbar und durch den Deckel (30) mit dem Verschlussetikett (23) in die Öffnungsstellung bewegbar ist.

7. Packung nach Anspruch 6 oder einem der weiteren Ansprüche, **dadurch gekennzeichnet, dass** das Verbindungsstück (52) an einem Kragen (47) der Außenpackung (10) angeordnet ist, insbesondere im Bereich einer Ausnehmung (49) der Kragen-Vorderwand (48), vorzugsweise derart, dass die Außenseite des Verbindungsstücks (52) - bei geschlossenem Deckel (30) - mit der Kragen-Vorderwand (48) bündig ist.

8. Packung nach Anspruch 6 oder 7, **dadurch gekennzeichnet, dass** das Verbindungsstück (52) als quergerichteter streifenförmiger Zuschnitt ausgebildet und vorzugsweise mit der Kragen-Vorderwand (48) lösbar verbunden ist, wobei vorzugsweise das Verbindungsstück (52) passend - der Kontur folgend - in der Ausnehmung (49) der Kragen-Vorderwand (48) angeordnet und über Restverbindungen (55) einstückig mit dem Zuschnitt des Kragens (47) verbunden ist, wobei beim erstmaligen Öffnen des Deckels unter Mitnahme des Verschlussetiketts (23) das Verbindungsstück (52) aus dem Verbund mit dem Kragen (47) heraustrennbar ist.

9. Packung nach Anspruch 6 oder einem der weiteren Ansprüche, **dadurch gekennzeichnet, dass** die Betätigungslasche (28) des Verschlussetiketts (23) innenseitig mit dem Verbindungsstück (52) durch vorzugsweise einen Leimstreifen (53) und dass das Verbindungsstück (52) mit der Innenseite der Deckel-Vorderwand (34) bzw. mit dem Deckel-Innenlappen (39) durch Leim, vorzugsweise durch zwei parallele Leimstreifen (54) verbunden ist.

## Claims

1. A pack, in particular for a cigarette group (12), consisting of an inner pack (11) produced from film, preferably sealing film, and of an outer pack (10) with a lid (30), in particular hinge lid pack, wherein the inner pack (11) has a removal opening (22) with a closure label (23) which is preferably repeatedly usable and is fixed on the inner pack (11) with a permanently acting adhesive and extends preferably in the region of an inner end wall (16) and at least one adjacent region of an inner front wall (13), wherein a free end region of the closure label (23) has a gripping tab or actuating tab (28) which is permanently connected to the inner side of the lid (30) - lid front wall (34) - in such a manner that, when the lid (30) is actuated, the closure label (23) is pulled by the lid (30) into an opening position or into a closure position, **characterized in that** projections (45, 46) are formed in the region of the connection of the closure label (23) or of the actuating tab (28) to the inner side of the lid (30), which connection is preferably produced by adhesive bonding or by sealing, said projections exerting pressure on the closure label (23) or the actuating tab (28) during the closing of the outer pack (10) or during the folding of the lid (30), in particular during the production of the outer pack (10) and/or during the use thereof, in such a manner that said closure label and actuating tab are pressed with a connecting region onto the associated wall of the pack - lid front wall (34) or lid inner flap (39).

2. The pack as claimed in claim 1, **characterized in that** the lid front wall (34) or the lid inner flap (39) arranged on the inner side has at least one projection or bead - mating projection (46) - which is produced in particular by embossing and is directed inward - in the direction of the inner pack (11) - against which the connecting region of the closure label (23) or of the actuating tab (28) lies, forming an (adhesive) connection, wherein preferably the outer pack (10), in the embodiment as a hinge lid box, has a collar (47) with a collar front wall (48) and a recess (49) in the region of the collar front wall (48), wherein the projections (45, 46) are arranged in the region of the recess (49) of the collar front wall (48), preferably directly above a transverse edge bounding the recess (49).

3. The pack as claimed in claim 1 or 2, **characterized in that** an inner blank of the inner pack (11), in particular an inner collar (42) or a supporting member - tray - within the inner pack (11) extends into the region of the connection of the closure label (23) to the lid (30) and has at least one projection (45) or a bead which is directed outward - with respect to the lid front wall (34) - and is preferably produced by embossing, in particular lying opposite to and corresponding with the (mating) projection (46) on the inner side of the lid front wall (34), wherein the inner collar (42) - tray - arranged in the inner pack (11) preferably has a tray front wall (43) which extends substantially over the height of the inner pack (11) or of the cigarette group (12) and has a recess (45) in an upper, end-side region, wherein the projection (44) is arranged below the recess (43), preferably centrally, in the region of the front wall (43) of the inner collar (42).

4. The pack as claimed in claim 1 or one of the further claims, **characterized in that** an - otherwise glue-free - actuating tab (28) of the closure label (23) by means of folding faces with an inner side outward - with respect to the lid front wall (34) -, wherein glue is provided on that side of the actuating tab (28) which is directed outward by means of folding, in particular in the embodiment as a strip-shaped region of glue (41).

5. The pack as claimed in claim 1 or one of the further claims, **characterized in that** the closure label (23) extends over the full width or area at least of the inner end wall (16) with lateral retaining strips (50) which are delimited by perforation lines (51) from a central part of the closure label (23) - main strip (71) -, wherein, during the opening of the lid (30) for the first time, the closure label (23) is released from the inner pack (11) and severed from the retaining strips (50).

6. A pack, in particular for a cigarette group (12), consisting of an inner pack (11) produced from film, preferably sealing film, and of an outer pack (10) with a lid (30), in particular hinge lid pack, wherein the inner pack (11) has a removal opening (22) with a closure label (23) which is preferably repeatedly usable and is fixed on the inner pack (11) with a permanently acting adhesive and extends preferably in the region of an inner end wall (16) and at least one adjacent region of an inner front wall (13), wherein a free end region of the closure label (23) has a gripping tab or actuating tab (28) which is permanently connected to the inner side of the lid (30) - lid front wall (34) - in such a manner that, when the lid (30) is actuated, the closure label (23) is pulled by the lid (30) into an opening position or into a closure position, **characterized by** a compensating piece or connecting piece (52) produced from thick-walled material, in particular from cardboard, on the inner side of the outer pack (10) or on the inner front wall (13) in the region of the actuating tab (28) which is connected (by adhesive bonding) to the compensating or connecting piece (52), wherein the connecting piece (52) is connected, preferably on the free outer side, to the inner side of the lid front wall (34) or to the lid inner flap (39) in such a manner that, during the opening of the lid (30), the closure label (23) or the actuating tab (28) thereof with the connecting piece (52) can be grasped and can be moved by the lid (30) with the closure label (23) into the opening position.

7. The pack as claimed in claim 6 or one of the further claims, **characterized in that** the connecting piece (52) is arranged on a collar (47) of the outer pack (10), in particular in the region of a recess (49) of the collar front wall (48), preferably in such a manner that the outer side of the connecting piece (52) is flush with the collar front wall (48) - when the lid (30) is closed.

8. The pack as claimed in claim 6 or 7, **characterized in that** the connecting piece (52) is designed as a transversely directed, strip-shaped blank and is preferably releasably connected to the collar front wall (48), wherein the connecting piece (52) is preferably suitably arranged - following the contour - in the recess (49) of the collar front wall (48) and is connected integrally to the blank of the collar (47) via residual connections (55), wherein, during the opening of the lid for the first time, with the closure label (23) being carried along, the connecting piece (52) can be detached from the assembly with the collar (47).

9. The pack as claimed in claim 6 or one of the further claims, **characterized in that** the actuating tab (28) of the closure label (23) is connected on the inner side to the connecting piece (52) by preferably one glue strip (53), and **in that** the connecting piece (52) is connected to the inner side of the lid front wall (34) or to the lid inner flap (39) by glue, preferably by two parallel glue strips (54).

## Revendications

1. Paquet, en particulier pour un groupe de cigarettes (12), constitué d'un paquet intérieur (11) en feuille, de préférence en feuille étanche et d'un paquet extérieur (10) avec un couvercle (30), en particulier un paquet à couvercle articulé ou à couvercle rabattable, le paquet intérieur (11) présentant une ouverture de prélèvement (22) avec une étiquette de fermeture (23) de préférence réutilisable plusieurs fois, qui est fixée au paquet intérieur (11) avec une colle à effet durable, et qui s'étend de préférence dans la région d'une paroi frontale intérieure (16) ainsi qu'au moins une région adjacente d'une paroi intérieure avant (13), l'étiquette de fermeture (23) présentant, au niveau d'une région d'extrémité libre, une patte de préhension ou une patte d'actionnement (28) qui est connectée de manière durable au côté intérieur du couvercle (30) - la paroi avant de couvercle (34) - de telle sorte que lors de l'actionnement du couvercle (30), l'étiquette de fermeture (23) soit tirée par le couvercle (30) dans une position d'ouverture ou de fermeture, **caractérisé en ce que** dans la région de la connexion de l'étiquette de fermeture (23) ou de la patte d'actionnement (28), de préférence produite par collage ou par scellage, au côté intérieur du couvercle (30), des saillies (45, 46) sont formées, lesquelles, lors de la fermeture du paquet extérieur (10) ou lors du repliement du couvercle (30), en particulier lors de la fabrication du paquet extérieur (10) et/ou lors de l'utilisation de celui-ci, exercent une pression sur l'étiquette de fermeture (23) ou la patte d'actionnement (28), de telle sorte que celle-ci soit pressée avec une région de connexion contre la paroi associée du paquet - la paroi avant de couvercle (34) ou le volet intérieur (39) du couvercle.

2. Paquet selon la revendication 1, **caractérisé en ce que** la paroi avant de couvercle (34) ou le volet intérieur (39) du couvercle disposé sur le côté intérieur présente au moins une saillie ou un bourrelet - une saillie conjuguée (46) - fabriqué(e) notamment par gaufrage, orienté(e) vers l'intérieur - dans la direction du paquet intérieur (11) - contre laquelle s'applique la région de connexion de l'étiquette de fermeture (23) ou de la patte d'actionnement (28) en formant une connexion (par collage). Le paquet extérieur (10) présentant de préférence, dans la réalisation sous forme de boîte rabattable, un collet (47) avec une paroi avant de collet (48) et un évidement (49) dans la région de la paroi avant de collet (48), les saillies (45, 46) étant disposées dans la région de l'évidement (49) de la paroi avant de collet (48), de préférence directement au-dessus d'une arête transversale limitant l'évidement (49).

3. Paquet selon la revendication 1 ou 2, **caractérisé en ce qu'**une pièce découpée intérieure du paquet intérieur (11), en particulier un collet intérieur (42) ou un organe de support - plateau - à l'intérieur du paquet intérieur (11) s'étend jusque dans la région de la connexion de l'étiquette de fermeture (23) au couvercle (30) et présente au moins une saillie (45) ou un bourrelet orienté(e) vers l'extérieur - vers la paroi avant de couvercle (34) -, de préférence fabriqué(e) par gaufrage, en particulier opposé(e) à et correspondant à la saillie (conjuguée) (46) au niveau du côté intérieur de la paroi avant de couvercle (34), le collet intérieur (42) disposé dans le paquet intérieur (11) - le plateau - présentant de préférence une paroi avant de plateau (43) qui s'étend essentiellement sur la hauteur du paquet intérieur (11) ou du groupe de cigarettes (12) et qui présente un évidement (45) dans une région frontale supérieure, la saillie (44) étant disposée en dessous de l'évidement (43), de préférence centralement, dans la région de la paroi avant (43) du collet intérieur (42).

4. Paquet selon la revendication 1 ou l'une quelconque des autres revendications, **caractérisé en ce qu'**une patte d'actionnement (28) - par ailleurs exempte de colle - de l'étiquette de fermeture (23) est orientée vers l'extérieur par pliage avec un côté intérieur - vers la paroi avant de couvercle (34) -, de la colle étant appliquée contre le côté de la patte d'actionnement (28) orienté vers l'extérieur par pliage, en particulier dans la réalisation en tant que plage de colle en forme de bande (41).

5. Paquet selon la revendication 1 ou selon l'une quelconque des autres revendications, **caractérisé en ce que** l'étiquette de fermeture (23) s'étend sur toute la largeur ou sur toute la surface d'au moins la paroi frontale intérieure (16), avec des rubans de retenue latéraux (50) qui sont limités par des lignes de perforations (51) d'une partie centrale de l'étiquette de fermeture (23) - rubans principaux (71), l'étiquette de fermeture (23) étant détachée du paquet intérieur (11) lors de la première ouverture du couvercle (30) et étant séparée des rubans de retenue (50).

6. Paquet, en particulier pour un groupe de cigarettes (12), constitué d'un paquet intérieur (11) en feuille, de préférence en feuille étanche et d'un paquet extérieur (10) avec un couvercle (30), en particulier un paquet à couvercle articulé ou à couvercle rabattable, le paquet intérieur (11) présentant une ouverture de prélèvement (22) avec une étiquette de fermeture (23) de préférence réutilisable plusieurs fois, qui est fixée au paquet intérieur (11) avec une colle à effet durable, et qui s'étend de préférence dans la région d'une paroi frontale intérieure (16) et au moins une région adjacente d'une paroi intérieure avant (13), l'étiquette de fermeture (23) présentant, au niveau d'une région d'extrémité libre, une patte de préhension ou une patte d'actionnement (28) qui est connectée de manière durable au côté intérieur du couvercle (30) - la paroi avant de couvercle (34) - de telle sorte que lors de l'actionnement du couvercle (30), l'étiquette de fermeture (23) soit tirée par le couvercle (30) dans une position d'ouverture ou de fermeture, **caractérisé par** une pièce de compensation ou une pièce de connexion (52) en matériau à paroi épaisse, en particulier en carton, au niveau du côté intérieur du paquet extérieur (10) ou au niveau de la paroi avant intérieure (13) dans la région de la patte d'actionnement (28) qui est connectée à la pièce de compensation ou de connexion (52) (par collage), la pièce de connexion (52) étant de préférence connectée au niveau du côté extérieur libre au côté intérieur de la paroi avant de couvercle (34) ou au volet intérieur de couvercle (39) de telle sorte que lors de l'ouverture du couvercle (30), l'étiquette de fermeture (23) ou sa patte d'actionnement (28) puisse être saisie avec la pièce de connexion (52) et puisse être déplacée dans la position d'ouverture par le couvercle (30) avec l'étiquette de fermeture (23).

7. Paquet selon la revendication 6 ou selon l'une quelconque des autres revendications, **caractérisé en ce que** la pièce de connexion (52) est disposée au niveau d'un collet (47) du paquet extérieur (10), en particulier dans la région d'un évidement (49) de la paroi avant de collet (48), de préférence de telle sorte que le côté extérieur de la pièce de connexion (52) - lorsque le couvercle (30) est fermé - soit aligné avec la paroi avant de collet (48).

8. Paquet selon la revendication 6 ou 7, **caractérisé en ce que** la pièce de connexion (52) est réalisée sous forme de pièce découpée en forme de ruban orientée transversalement et est connectée de manière amovible de préférence à la paroi avant de collet (48), la pièce de connexion (52) étant de préférence disposée de manière ajustée - en suivant le contour - dans l'évidement (49) de la paroi avant de collet (48), et étant connectée par le biais de connexions restantes (55) d'une seule pièce à la pièce découpée du collet (47), la pièce de connexion (52) pouvant être détachée de l'assemblage avec le collet (47) lors de la première ouverture du couvercle en entraînant l'étiquette de fermeture (23).

9. Paquet selon la revendication 6 ou selon l'une quelconque des autres revendications, **caractérisé en ce que** la patte d'actionnement (28) de l'étiquette de fermeture (23) est connectée du côté intérieur à la pièce de connexion (52), de préférence par un ruban de colle (53), et **en ce que** la pièce de connexion (52) est connectée au côté intérieur de la paroi avant de couvercle (34) ou au volet intérieur de couvercle (39) par de la colle, de préférence par deux rubans de colle parallèles (54).
